# EUROPEAN PATENT SPECIFICATION

(11) **EP 2 940 557 B1**
(45) Date of publication and mention of the grant of the patent: **02.11.2022**
(21) Application number: 13867100.3
(22) Date of filing: 12.11.2013
(51) Int. Cl.: G06F 3/023, G06F 3/01

(54) **METHOD AND DEVICE USED FOR PROVIDING INPUT CANDIDATE ITEM CORRESPONDING TO INPUT CHARACTER STRING**
VERFAHREN UND VORRICHTUNG ZUR BEREITSTELLUNG EINES EINGABEKANDIDATENELEMENTS ENTSPRECHEND EINER EINGABEZEICHENKETTE
PROCÉDÉ ET DISPOSITIF DE FOURNITURE D'UN OBJET CANDIDAT D'ENTRÉE CORRESPONDANT À UNE CHAÎNE DE CARACTÈRES D'ENTRÉE

(30) Priority: 31.12.2012 CN 201210592774
(43) Date of publication of application: 04.11.2015
(73) Proprietor: Baidu Online Network Technology (Beijing) Co., Ltd, Beijing 100085 (CN)
(72) Inventor: LU, Yangyang, Beijing 100085 (CN); MENG, Kefeng, Beijing 100085 (CN)
(74) Representative: Cabinet Beau de Loménie
(86) International application number: PCT/CN2013/086968
(87) International publication number: WO 2014/101577

(56) References cited:
- EP-A1- 2 133 772
- EP-A1- 2 293 168
- EP-A2- 1 320 023
- CN-A- 101 246 410
- CN-A- 102 346 743
- CN-A- 103 076 892
- US-A1- 2007 074 131
- US-A1- 2008 193 015

## Description

### FIELD OF THE INVENTION

The present invention relates to the field of Internet, and in particular to the technology for providing input candidate items corresponding to an input character string.

### BACKGROUND OF THE INVENTATION

For Chinese input, there are a considerable number of homonyms; however, in actuality, a user only selects one of them during the input process. The current input method provides a plurality of input candidate items to the user, who makes selection according to the actual needs. When there are many input candidate items, the user's selecting operation will cause the input to be slow and inefficient. Considering there is a certain semantic or logical relationship between inputs of characters, it becomes an issue imminent to be solved by those skilled in the art that is how to process the input candidate items using the semantic or logical relationships so as to improve the user experience.

Document EP2293168A1 discloses a system of implementing flexible keyboard layout for inputting text into an electronic device, where a user's input is mapped to a character set based on a keyboard layout, and an input sequence is formed. Document US20070074131A1 discloses a device including a display screen for displaying m-words of data, a text entry device for entering data, and a processor receiving data from the text entry device and causing it to be displayed on the display screen. Document US20080193015A1 discloses an input method for selecting a character from a plurality of characters of a logographic script, and identifying characters proximate the selected character. Document EP1320023A2 discloses a method for handling the input of words into a text string in a communication terminal by recording a key stroke sequence inputted for characterising one of said words, and comparing said key stroke sequence with candidates in a word completion directory in order to find word completion candidates matching said key stroke sequence. Document EP2133772A1 discloses a device incorporating an improved text input mechanism, a method for improved text input and a computer program for performing the method. These documents in the prior art may be useful for understanding the present application. The present application has improvements and advantages over these documents, which will be better understood from the following description.

### SUMMARY OF THE INVENTION

An object of the invention is providing a method and a device for providing input candidate items corresponding to an input character string.

According to one aspect of the invention, a method for providing input candidate items corresponding to an input character string according to claim 1 is provided.

According to another aspect of the invention, an input device for providing input candidate items corresponding to an input character string according to claim 6 is further provided.

Compared with the prior art, the present invention determines one or more input candidate items corresponding to the input character string based on the context information of the input character string, and provides at least one of the one or more input candidate items to a target application corresponding to the input character string; thereby, the present invention enhances the input flexibility, meets the user's input needs, enhances the input efficiency of the input method, and improves user experience.

Moreover, the present invention may process the one or more preliminary input candidate items corresponding to the input character string , so as to obtain the one or more input candidate items; furthermore, the present invention may further process the one or more preliminary input candidate items based on collocation relevancy information between the preliminary input candidate items and the corresponding context information, so as to obtain the one or more input candidate items; furthermore, the present invention may perform analysis processing of text information to obtain a word segmentation collocation relationship whose collocation frequency satisfies a certain threshold, so as to establish or update a word collocation database. Thereby, the present invention enhances the match accuracy between the input character string and the input candidate items, meets the user's input needs, enhances the input efficiency of the input method, and improves user experience.

Moreover, the present invention may determine a supplementary character string including the input character string, and obtains one or more supplementary input candidate items corresponding to the supplementary character string based on the supplementary character string, then, performs screening processing of the supplementary input candidate items to obtain the one or more input candidate items. Thereby, the present invention enhances the input flexibility, enhances the match accuracy between the input character string and the input candidate items, meets the user's input needs, enhances the input efficiency of the input method, and improves user experience.

Moreover, the present invention may extract a corresponding focal word as the context from a relevancy text by performing natural language processing of the relevancy text corresponding to the input character string, thereby enhancing the match accuracy between the input character string and the input candidate items, meeting the user's input needs, enhancing the input efficiency of the input method, and improving user experience.

Moreover, the present invention may detect whether the input character string has exceeded a predetermined length threshold, if the input character string exceeds the length threshold, iteratively determine one or more input candidate items corresponding to the input character string based on the input character string and the context information; furthermore, detect whether the number of words of at least one of the one or more sample input candidate items which corresponds to the input character string in an input lexicon has exceeded a predetermined threshold of the number of words, to determine whether the input character string exceeds a predetermined length threshold; furthermore, when the input character string exceeds the length threshold, determine partial input candidate items and remaining input candidate items, and determine the one or more input candidate items based on the one or more partial input candidate items and the one or more remaining input candidate items. Thereby, the present invention enhances the input flexibility, enhances the match accuracy between the input character string and the input candidate items, meets the user's input needs, enhances the input efficiency of the input method, and improves user experience.

### BRIEF DESCRIPTION OF THE DRAWINGS

Other features, purposes and advantages of the invention will become more explicit by means of reading the detailed statement of the non-restrictive embodiments made with reference to the accompanying drawings.
Fig. 1 shows a schematic diagram of the input device for providing input candidate items corresponding to an input character string according to one aspect of the present invention.
Fig. 2 shows a schematic diagram of the input device for providing input candidate items corresponding to an input character string according to one preferred embodiment of the present invention.
Fig. 3 shows a schematic diagram of the input device for providing input candidate items corresponding to an input character string according to the present invention.
Fig. 4 shows a flow diagram of a method for providing input candidate items corresponding to an input character string according to another aspect of the present invention.
Fig. 5 shows a flow diagram of a method for providing input candidate items corresponding to an input character string according to one preferred embodiment of the present invention.
Fig. 6 shows a flow diagram of a method for providing input candidate items corresponding to an input character string according to the present invention.

The same or similar reference signs in the drawings represent the same or similar component parts.

### DETAILED DESCRIPTION OF THE INVENTION

Below, details of the invention will be further provided in combination with the accompanying drawings.

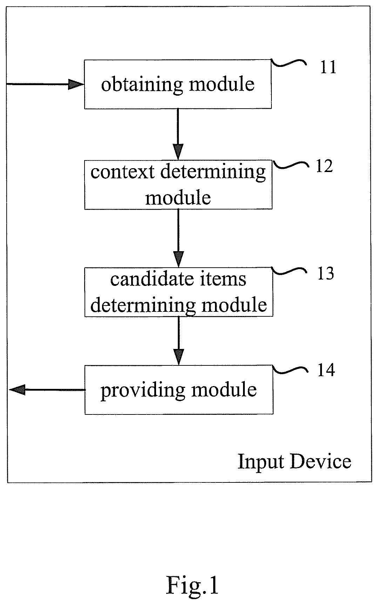

Fig. 1 shows a schematic diagram of the input device for providing input candidate items corresponding to an input character string according to one aspect of the present invention; wherein, the input device comprises an obtaining module 11, a context determining module 12, a candidate items determining module 13, a providing module 14. Specifically, the obtaining module 11 obtains an input character string; the context determining module 12 determines context information of the input character string; the candidate items determining module 13 determines one or more input candidate items corresponding to the input character string based on the input character string and the context information; the providing module 14 provides at least one of the one or more input candidate items to a target application corresponding to the input character string. Here, the input device includes, but is not limited to, network device, user device or a device integrated network device(s) and user device(s) through a network. Here, the network device includes, but is not limited to, personal computer(s), network host(s), single network server, a set of multiple network servers or a cloud network formed by multiple servers; herein, the cloud network is formed by a large number of computers or network servers based on Cloud Computing, wherein, the cloud computing is a kind of distributed computing, which is a virtual supercomputer consisting of a group of loosely coupled computers set. The user device includes, but is not limited to, any electronic product which could process man-machine interaction with the user through keyboard, remote-control unit, touch panel, or acoustic equipment, such as personal computers, smart phones, PDAs, game consoles, or IPTV and so on. The network includes, but is not limited to, the Internet, Wide Area Network, Metropolitan Area Network, LAN, VPN, wireless self-organizing network (Ad Hoc network), etc.

The above modules work constantly therebetween. Here, those skilled in the art should understand that "constantly" means the above various modules perform obtaining an input character string, determining context information, determining input candidate items, providing input candidate items and etc. respectively in real-time or according to a preset or real-time adjusted working pattern requirements, until the input device stops obtaining an input character string.

The obtaining module 11 obtains an input character string. Specifically, the obtaining module 11 receives a character string inputted by the user or other applications through operations such as input, select, click and the like from an input box; or based on various communication protocols via various data transmission interfaces, obtains a character string from within an input box of other applications; wherein the input box is such as an SMS editing box, content input box, etc.. Here, the input character string includes, but is not limited to, pinyin coded characters and the like inputted as full pinyin or simplified pinyin and the like.

The context determining module 12 determines context information of the input character string. Specifically, the context determining module 12 matches the words to which the current input character string belongs with one or more lexicons using the words to which the currently inputted character string belongs based on the input character string obtained by the obtaining module 11, and obtains one or more kind of matching information associated with the input character string as the context information of the input character string; for example, when inputting "huacao", it is first determined that the words to which the input character string belongs are likely " 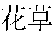 (flower and grass)," and based on the matching information of " 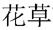 " in the lexicon, it is determined that its context information could be " 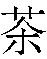 (tea)," and the like; or, the context determining module 12 determines the context information of the input character string based on the historical record information corresponding to the input character string, e.g., the preceding input character string just displayed on the screen before the present input character string may be used as the previous context information of the input character string. Herein, the context information includes, but is not limited to, preceding context information or subsequent context information corresponding to the input character string; for example, when the input is "shishi," and when the phrase displayed on the screen for the preceding input is " 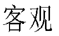 (objective)," then the preceding context information corresponding to the "shishi" is " 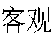 "; if the screen presents a phrase " 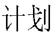 (plan)" and when "shishi" is input, the cursor is positioned before " 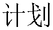 ," then the corresponding subsequent context information is " 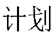 ".

The candidate items determining module 13 determines one or more input candidate items corresponding to the input character string based on the input character string and the context information. Specifically, the candidate items determining module 13 determines one or more input candidate items corresponding to the input character string by directly using one or more pieces of context information corresponding to the input character string as one or more input candidate items based on the input character string obtained by the obtaining module 11 and the context information determined by the context determining module 12, or using the processed context information corresponding to the input character string as the input candidate items. For example, following the above example, when the input character string is "shishi", its corresponding preceding context information could be " 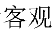 ", " 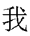 (I)" , " 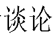 (discuss)", etc.; when the preceding context information is " 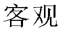 ", it is determined that the input candidate items are " 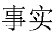 (fact)", " 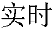 (real-time)", " 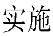 (implement)", and the like by the manner of matching the input character string and the context information matching; when the preceding context information is " 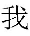 ", it is determined that the input candidate items are " 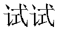 (try)", " 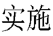 (implement)", " 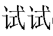 (try)", and the like; when the preceding context information is " 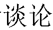 (discuss)", it is determined that the input candidate items are " 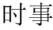 (current events)", " 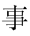 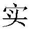 (facts)", " 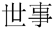 (things of the world)", and the like.

The providing module 14 provides at least one of the one or more input candidate items to a target application corresponding to the input character string. Specifically, the providing module 14 provides at least one of the one or more input candidate items to a target application corresponding to the input character string directly or based on various communication protocols with various data transfer interfaces through re-ordering or screening as an example, wherein the target application includes, but is not limited to, the same application corresponding to an input box corresponding to the obtaining module 11, or other application associated with the input box corresponding to the obtaining module 11, e.g., performing search directly using the input candidate item, etc.

Preferably, the candidate items determining module 13 may determine a supplementary character string including the input character string based on the input character string and the context information, wherein the supplementary character string further comprises a character string corresponding to the context information; perform match query in an input lexicon based on the supplementary character string to obtain one or more supplementary input candidate items corresponding to the supplementary character string; and perform screening processing to the one or more supplementary input candidate items based on the context information to obtain the one or more input candidate items. Specifically, the candidate items determining module 13 may also determine a supplementary character string including the input character string based on the input character string and the context information by matching the input character string in combination with the context information to for example the input lexicon. For example, when the input character string is "xuxu" and the context information is " 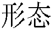 (shape)," then it is determined that the supplementary character string is "rusheng"; or, when the input character string is "tianan" and the context information is " 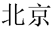 (Beijing)," then it is determined that the supplementary character string is "men." Here, the supplementary character string includes, but is not limited to, one or more multi-segment character strings formed by joining which are determined by matching. The candidate items determining module 13 obtains one or more supplementary input candidate items corresponding to the supplementary character strings by performing a match query for the supplementary character string in the input lexicon. Following the above example, when the supplementary character string is "rusheng" and the corresponding supplementary input candidate items are, for example, " 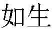 (ru' sheng, vivid)," " 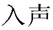 (ru'sheng, the fourth tone in Chinese pronunciation)," " 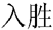 (ru'sheng, fascinating)," and the like; when the supplementary character string is "men," the corresponding supplementary input candidate items are " 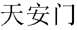 (tian'an men)," " 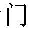 (men, gate)," etc. Or, the supplementary input candidate item may also directly comprise the context information, e.g., directly generating " 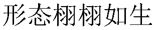 (the shape is vivid)," " 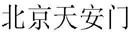 (Beijing Tian'an Men)," and the like. Based on the context information, the one or more supplementary input candidate items are subject to screening processing. Following the above example, based on the context information, the input candidate items are determined to " 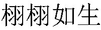 " " 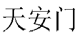 ," respectively, thereby obtaining one or more input candidate items; here, if the supplementary input candidate items comprise context information, then after the context information in the supplementary input candidate item is deleted, one or more input candidate items are obtained. For example, if " 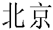 " in the supplementary input candidate item " 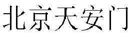 " is deleted, one or more input candidate items, i.e., " 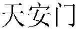 " are obtained.

Preferably, the context determining module 12 may extract a corresponding focal word as the context from a relevancy text by performing natural language processing of the relevancy text corresponding to the input character string, wherein the focal word is adjacent to an input position corresponding to the input character string. Specifically, the context determining module 12 may also perform natural language processing of relevant text corresponding to the input character string by segmentation or semantic analysis, wherein the relevant text includes, but is not limited to, the text corresponding to the input character string per se, or relevant text that has been displayed on the screen before/after the input position corresponding to the input character string; by performing natural language processing of the relevant text, corresponding focal words are extracted as the context. For example, when the input character string is "shishi", its corresponding relevant text is " 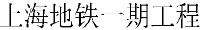 (Shanghai metro first-stage project)", and the input character string is located after " 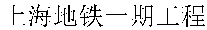 ", and by performing natural language processing to the relevant text, the focal word as extracted is " 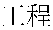 (project)", which is used as the context. Further, when the input character string is "shishi", the input device determines, based on the context "project", that the input candidate items are " 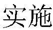 (shishi, implement)", " 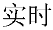 (shishi, real-time)", and " 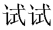 (shishi, try)", etc.

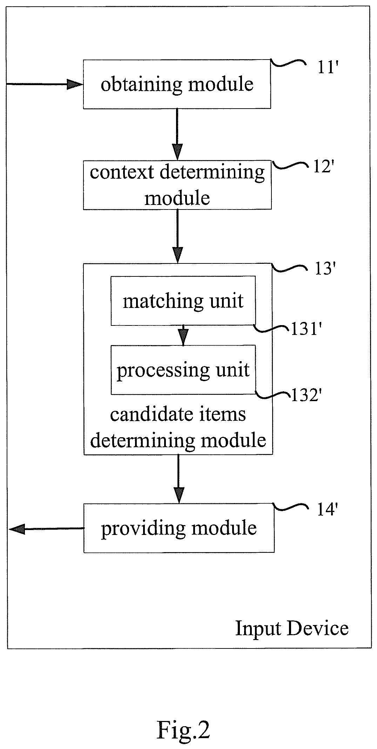

Fig. 2 shows a schematic diagram of the input device for providing input candidate items corresponding to an input character string according to one preferred embodiment of the present invention; wherein, the input device comprises an obtaining module 11', a context determining module 12', a candidate items determining module 13', a providing module; here, the candidate items determining module 13' comprises a matching unit 131' and a processing unit 132'. Specifically, the obtaining module 11' obtains an input character string; the context determining module 12' determines context information of the input character string; the matching unit 131' performs match query in an input lexicon based on the input character string, so as to obtain one or more preliminary input candidate items corresponding to the input character string; the processing unit 132' processes the one or more preliminary input candidate items based on the context information, so as to obtain the one or more input candidate items; the providing module 14' provides at least one of the one or more input candidate items to a target application corresponding to the input character string. Herein, the obtaining module 11',the context determining module 12', the providing module 14' are identical or substantially identical to corresponding modules shown in Fig. 1, which are thus not detailed here.

The above modules work constantly therebetween. Here, those skilled in the art should understand that "constantly" means the above various modules perform obtaining an input character string, determining context information, obtaining preliminary input candidate items, determining input candidate items, providing input candidate items and etc. respectively in real-time or according to a preset or real-time adjusted working pattern requirements, until the input device stops obtaining an input character string.

The matching unit 131' performs match query in an input lexicon based on the input character string, so as to obtain one or more preliminary input candidate items corresponding to the input character string. Specifically, the matching unit 131' matches the input character string with words in the input lexicon by obtaining the input character string, so as to obtain one or more preliminary input candidate items corresponding to the input character string. For example, when the input character string is "shishi", after performing match query in the input lexicon, a plurality of preliminary input candidate items such as "(shishi, real-time)", " 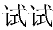 (shishi, try)", " 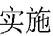 (shishi, implement)", " 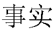 (shishi, fact)", " 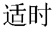 (shishi, at appropriate time)", " 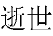 (shishi, deceased)", and etc. are obtained.

The processing unit 132' processes the one or more preliminary input candidate items based on the context information, so as to obtain the one or more input candidate items. Specifically, the processing unit 132' determines a collocation probability between the context information and the preliminary input candidate items based on the context information of the input character string through a natural language model or a word collocation database, etc., and performing screening or ordering of the preliminary input candidate items based on the collocation probability, to obtain the input candidate items. For example, following the above example, when the context information is " 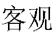 (objective)", then after processing, through reordering the preliminary input candidate items, the order changes to be " 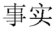 (shishi, fact)", " 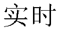 (shishi, real-time)", " 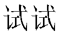 (shishi, try)", " 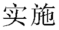 (shishi, implement)", " 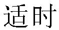 (shishi, at appropriate time)", " 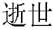 (shishi, deceased)", and etc.

Preferably, the processing unit 132' may perform match query in a word collocation database based on the context information to determine collocation relevancy information between the preliminary input candidate items and the corresponding context information; and process the one or more preliminary input candidate items based on the collocation relevancy information to obtain the one or more input candidate items. Specifically, the processing unit 132' may also perform matching query in the word collocation database based on the context information, to determine the collocation relevancy information between the preliminary input candidate items and the corresponding context information based on the matching relationship between the one or more entries in the word collocation database and the context; for example, if it is a boolean variable, then the collocation relevancy information indicates if a collocation exists; if it is a continuous variable, the collocation relevancy information indicates the collocation probability; here, the collocation relevancy information may be obtained through machine learning based on the combination frequency of a context and preliminary input candidate items in a word collocation database or other relevant databases. Based on the collocation relevancy information, by performing screening or ordering processing to the one or more preliminary input candidate items, the one or more input candidate items are obtained.

More preferably, the input device further comprises a text processing module (not shown) and an establishing module (not shown); wherein, the text processing module performs analysis processing of one or more pieces of text information to obtain a word segmentation collocation relationship whose collocation frequency satisfies a certain threshold; the establishing module establishes or updates the word collocation database based on the word segmentation collocation relationship. Specifically, the text processing module obtains various logs or various articles, and performs an analysis method, for example, first performing word segmentation of the obtained text information, and then making statistics on the co-appearance frequency for neighboring words; when the co-appearance frequency exceeds a certain threshold, the text processing module judges that there is a certain collocation relationship between adjacent words, thereby obtaining a word segmentation collocation relationship whose collocation frequency satisfies a certain threshold; the establishing module establishes the word collocation database based on the word segmentation collocation relationship, or updates the existing word collocation database, etc. Here, the word collocation database includes, but is not limited to, collocation probability information between word segmentation collocation relationship and word segmentation collocation relationship; besides, the word collocation database likely comprises existing fixed words, e.g., idioms, proverbs, etc.; and meanwhile, through the update, the new words and expressions generated with rapid development of the existing network applications may be included therein, thereby effectively enhancing the user's input efficiency.

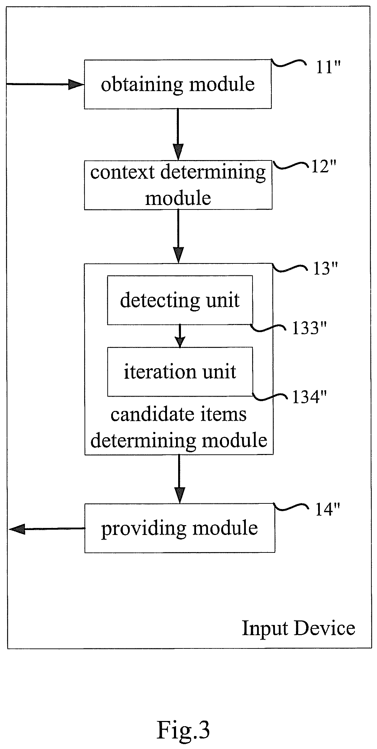

Fig. 3 shows a schematic diagram of the input device for providing input candidate items corresponding to an input character string according to the present invention; wherein, the input device comprises an obtaining module 11", a context determining module 12", a candidate items determining module 13", a providing module 14"; here, the candidate items determining module 13" comprises a detecting unit 133" and an iteration unit 134". Specifically, the obtaining module 11" obtains an input character string; the context determining module 12" determines context information of the input character string; the detecting unit 133" detects whether the input character string has exceeded a predetermined length threshold; if the input character string exceeds the length threshold, the iteration unit 134" iteratively determines one or more input candidate items corresponding to the input character string based on the input character string and the context information; the providing module 14" provides at least one of the one or more input candidate items to a target application corresponding to the input character string. Herein, the obtaining module 11",the context determining module 12", the providing module 14" are identical or substantially identical to corresponding modules shown in Fig. 1, which are thus not detailed here.

The above modules work constantly therebetween. Here, those skilled in the art should understand that "constantly" means the above various modules perform obtaining an input character string, determining context information, detecting a length threshold, determining input candidate items, providing input candidate items and etc. respectively in real-time or according to a preset or real-time adjusted working pattern requirements, until the input device stops obtaining an input character string.

The detecting unit 133" detects whether the input character string has exceeded a predetermined length threshold. Specifically, the detecting unit 133" detects a length of the input character string based on a preset length threshold or a length threshold set by the user itself, to detect whether the length of the input character string has exceeded the predetermined length threshold. For example, when the predetermined character length threshold is N, and when the length of the input character string is N+1, then the detecting unit 133" detects that the input character string has exceeded the predetermined length threshold.

If the input character string exceeds the length threshold, the iteration unit 134" iteratively determines one or more input candidate items corresponding to the input character string based on the input character string and the context information. Specifically, if the input character string has exceeded the length threshold, the iteration unit 134" determines the input candidate item(s) corresponding to a first input character string within the length threshold based on the input character string and the context information through performing segmentation and other processing of the input character string based on the length threshold, and re-uses the determined input candidate item(s) as the context information, thereby determining one or more input candidate items corresponding to the input character string by the means of iteratively determining the input candidate item(s) corresponding to the next input character string within the length threshold.

Preferably, the detecting unit 133" may obtain one or more sample input candidate items corresponding to the input character string in an input lexicon; detect whether the number of words of at least one of the one or more sample input candidate items has exceeded a predetermined threshold of the number of words, to determine whether the input character string exceeds a predetermined length threshold. Specifically, the detecting unit 133" may also obtain one or more input candidate items corresponding to the entire input character string through, for example, directly matching the input character string in the input lexicon, and then, through random extraction or designated extraction (e.g., selecting the first input candidate item, etc.), obtain one or more sample input candidate items corresponding to the input character string in the input lexicon; and finally, determine whether the input character string has exceeded a predetermined length threshold through detecting the one or more sample input candidate items, e.g., at least one of the sample input candidate items exceeds a predetermined word number threshold.

Preferably, the iteration unit 134" may determine, based on the context information and a partial input character string adjacent to the context information in the input character string, one or more partial input candidate items corresponding to the partial input character string when the input character string exceeds the length threshold; determine, based on the partial input character string and a remaining input character string in the input character string, one or more remaining input candidate items corresponding to the remaining input character string, wherein the partial input candidate item(s) are used as context information of the remaining input character string; determine the one or more input candidate items based on the one or more partial input candidate items and the one or more remaining input candidate items.

Specifically, when the input character string exceeds the length threshold, the input character string is subject to word segmentation or paragraph segmentation and the like based on the context information, thereby obtaining a part of input character strings adjacent to the context information in the input character string, and determines one or more partial input candidate items corresponding to the partial input character string by combining the partial input character string with the context information; here, the determining method is identical or similar to the determining method in the candidate items determining module 13 in Fig. 1, which will not be detailed here. The iteration unit 134" uses the partial input candidate item(s) as the context information of the remaining input character string, by way of iteration, to determine one or more remaining input candidate items corresponding to the remaining input character string; after iteration, the partial input candidate item(s) and the remaining input candidate item(s) are joined and the like to determine one or more input candidate items based on for example the relationships between these character strings.

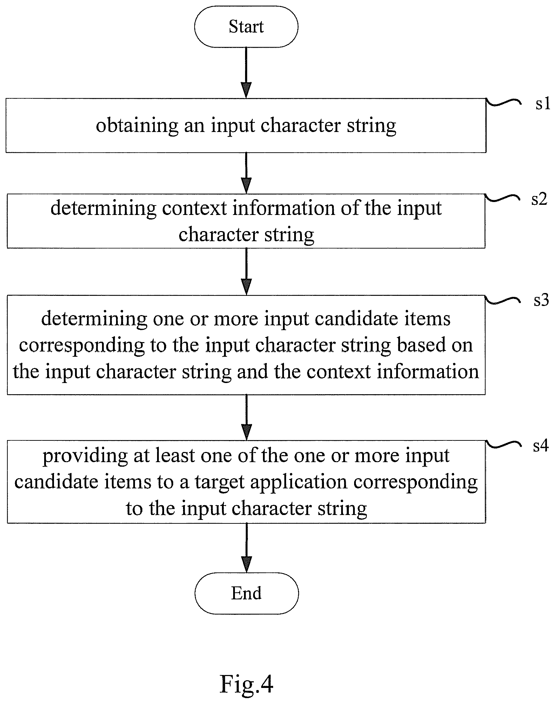

Fig. 4 shows a flow diagram of a method for providing input candidate items corresponding to an input character string according to another aspect of the present invention. Specifically, in a step s1, the input device obtains an input character string; in a step s2, the input device determines context information of the input character string; in a step s3, the input device determines one or more input candidate items corresponding to the input character string based on the input character string and the context information; in a step s4, the input device provides at least one of the one or more input candidate items to a target application corresponding to the input character string.

The above steps work constantly therebetween. Here, those skilled in the art should understand that "constantly" means the above various steps perform obtaining an input character string, determining context information, determining input candidate items, providing input candidate items and etc. respectively in real-time or according to a preset or real-time adjusted working pattern requirements, until the input device stops obtaining an input character string.

In the step s1, the input device obtains an input character string. Specifically, in the step s1, the input device receives a character string inputted by the user or other applications through operations such as input, select, click and the like from an input box; or based on various communication protocols via various data transmission interfaces, obtains a character string from within an input box of other applications; wherein the input box is such as an SMS editing box, content input box, etc.. Here, the input character string includes, but is not limited to, pinyin coded characters and the like inputted as full pinyin or simplified pinyin and the like.

In the step s2, the input device determines context information of the input character string. Specifically, in the step s2, the input device matches the words to which the current input character string belongs with one or more lexicons using the words to which the currently inputted character string belongs based on the input character string obtained by the step s1, and obtains one or more kind of matching information associated with the input character string as the context information of the input character string; for example, when inputting "huacao", it is first determined that the words to which the input character string belongs are likely " 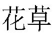 (flower and grass)," and based on the matching information of " 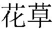 " in the lexicon, it is determined that its context information could be " 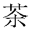 (tea)," and the like; or, in the step s2, the input device determines the context information of the input character string based on the historical record information corresponding to the input character string, e.g., the preceding input character string just displayed on the screen before the present input character string may be used as the previous context information of the input character string. Herein, the context information includes, but is not limited to, preceding context information or subsequent context information corresponding to the input character string; for example, when the input is "shishi," and when the phrase displayed on the screen for the preceding input is " 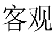 (objective)," then the preceding context information corresponding to the "shishi" is " 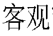 "; if the screen presents a phrase " 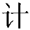 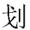 (plan)" and when "shishi" is input, the cursor is positioned before " 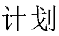 ," then the corresponding subsequent context information is " 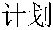 ".

In the step s3, the input device determines one or more input candidate items corresponding to the input character string based on the input character string and the context information. Specifically, in the step s3, the input device determines one or more input candidate items corresponding to the input character string by directly using one or more pieces of context information corresponding to the input character string as one or more input candidate items based on the input character string obtained by the step s1 and the context information determined by the step s2, or using the processed context information corresponding to the input character string as the input candidate items. For example, following the above example, when the input character string is "shishi", its corresponding preceding context information could be " 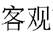 ", " 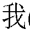 (I)" , " 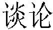 (discuss)", etc.; when the preceding context information is " 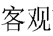 ", it is determined that the input candidate items are " 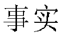 (fact)", " 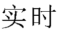 (real-time)", " 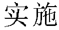 (implement)", and the like by the manner of matching the input character string and the context information matching; when the preceding context information is " 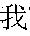 ", it is determined that the input candidate items are " 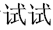 (try)", " 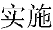 (implement)", " 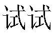 (try)", and the like; when the preceding context information is " 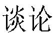 (discuss)", it is determined that the input candidate items are " 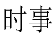 (current events)", " 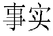 (facts)", " 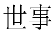 (things of the world)", and the like.

In the step s4, the input device provides at least one of the one or more input candidate items to a target application corresponding to the input character string. Specifically, in the step s4, the input device provides at least one of the one or more input candidate items to a target application corresponding to the input character string directly or based on various communication protocols with various data transfer interfaces through re-ordering or screening as an example, wherein the target application includes, but is not limited to, the same application corresponding to an input box corresponding to the step s1, or other application associated with the input box corresponding to the step s1, e.g., performing search directly using the input candidate item, etc.

Preferably, in the step s3, the input device may determine a supplementary character string including the input character string based on the input character string and the context information, wherein the supplementary character string further comprises a character string corresponding to the context information; perform match query in an input lexicon based on the supplementary character string to obtain one or more supplementary input candidate items corresponding to the supplementary character string; and perform screening processing to the one or more supplementary input candidate items based on the context information to obtain the one or more input candidate items. Specifically, in the step s3, the input device may also determine a supplementary character string including the input character string based on the input character string and the context information by matching the input character string in combination with the context information to for example the input lexicon. For example, when the input character string is "xuxu" and the context information is " 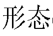 (shape)," then it is determined that the supplementary character string is "rusheng"; or, when the input character string is "tianan" and the context information is " 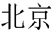 (Beijing)," then it is determined that the supplementary character string is "men." Here, the supplementary character string includes, but is not limited to, one or more multi-segment character strings formed by joining which determined by matching. In the step s3, the input device obtains one or more supplementary input candidate items corresponding to the supplementary character strings by performing a match query for the supplementary character string in the input lexicon. Following the above example, when the supplementary character string is "rusheng" and the corresponding supplementary input candidate items are, for example, " 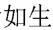 (ru' sheng, vivid)," " 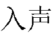 (ru'sheng, the fourth tone in Chinese pronunciation)," " 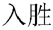 (ru'sheng, fascinating)," and the like; when the supplementary character string is "men," the corresponding supplementary input candidate items are " 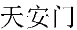 (tian'an men)," " 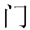 (men, gate)," etc. Or, the supplementary input candidate item may also directly comprise the context information, e.g., directly generating " 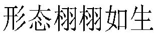 (the shape is vivid)," " 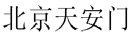 (Beijing Tian'an Men)," and the like. Based on the context information, the one or more supplementary input candidate items are subject to screening processing. Following the above example, based on the context information, the input candidate items are determined to " 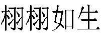 ," " 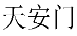 ," respectively, thereby obtaining one or more input candidate items; here, if the supplementary input candidate items comprise context information, then after the context information in the supplementary input candidate item is deleted, one or more input candidate items are obtained. For example, if " 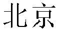 " in the supplementary input candidate item " 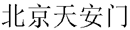 " is deleted, one or more input candidate items, i.e., " 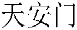 ," are obtained.

Preferably, in the step s2, the input device may extract a corresponding focal word as the context from a relevancy text by performing natural language processing of the relevancy text corresponding to the input character string, wherein the focal word is adjacent to an input position corresponding to the input character string. Specifically, in the step s2, the input device may also perform natural language processing of relevant text corresponding to the input character string by segmentation or semantic analysis, wherein the relevant text includes, but is not limited to, the text corresponding to the input character string per se, or relevant text that has been displayed on the screen before/after the input position corresponding to the input character string; by performing natural language processing of the relevant text, corresponding focal words are extracted as the context. For example, when the input character string is "shishi", its corresponding relevant text is " 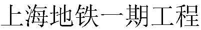 (Shanghai metro first-stage project)", and the input character string is located after " 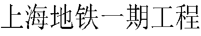 " and by performing natural language processing to the relevant text, the focal word as extracted is " 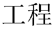 (project)", which is used as the context. Further, when the input character string is "shishi", the input device determines, based on the context "project", that the input candidate items are " 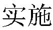 (shishi, implement)", " 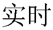 (shishi, real-time)", and " 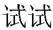 (shishi, try)", etc.

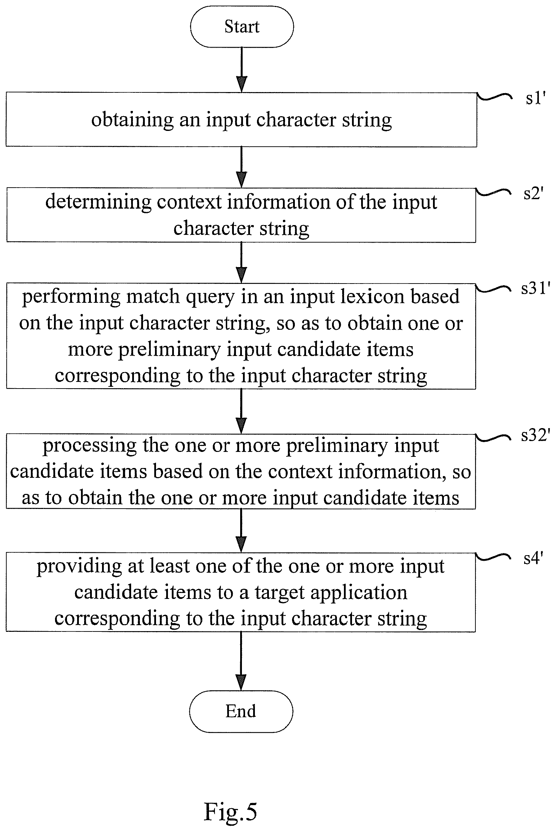

Fig. 5 shows a flow diagram of a method for providing input candidate items corresponding to an input character string according to one preferred embodiment of the present invention. Specifically, in the step s1', the input device obtains an input character string; in the step s2', the input device determines context information of the input character string; in the step s31', the input device performs match query in an input lexicon based on the input character string, so as to obtain one or more preliminary input candidate items corresponding to the input character string; in the step s32', the input device processes the one or more preliminary input candidate items based on the context information, so as to obtain the one or more input candidate items; in the step s4', the input device provides at least one of the one or more input candidate items to a target application corresponding to the input character string. Herein, the step s1',the step s2', the step s4' are identical or substantially identical to corresponding steps shown in Fig. 4, which are thus not detailed here.

The above steps work constantly therebetween. Here, those skilled in the art should understand that "constantly" means the above various steps perform obtaining an input character string, determining context information, obtaining preliminary input candidate items, determining input candidate items, providing input candidate items and etc. respectively in real-time or according to a preset or real-time adjusted working pattern requirements, until the input device stops obtaining an input character string.

In the step s31', the input device performs match query in an input lexicon based on the input character string, so as to obtain one or more preliminary input candidate items corresponding to the input character string. Specifically, in the step s31', the input device matches the input character string with words in the input lexicon by obtaining the input character string, so as to obtain one or more preliminary input candidate items corresponding to the input character string. For example, when the input character string is "shishi", after performing match query in the input lexicon, a plurality of preliminary input candidate items such as " 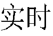 (shishi, real-time)", " 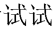 (shishi, try)", " 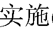 (shishi, implement)", " 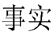 (shishi, fact)", " 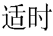 (shishi, at appropriate time)", " 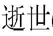 (shishi, deceased)", and etc. are obtained.

In the step s32', the input device processes the one or more preliminary input candidate items based on the context information, so as to obtain the one or more input candidate items. Specifically, in the step s32', the input device determines a collocation probability between the context information and the preliminary input candidate items based on the context information of the input character string through a natural language model or a word collocation database, etc., and performing screening or ordering of the preliminary input candidate items based on the collocation probability, to obtain the input candidate items. For example, following the above example, when the context information is " 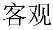 (objective)", then after processing, through reordering the preliminary input candidate items, the order changes to be " 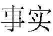 (shishi, fact)", " 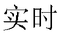 (shishi, real-time)", " 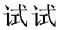 (shishi, try)", " 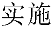 (shishi, implement)", " 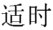 (shishi, at appropriate time)", " 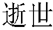 (shishi, deceased)", and etc.

Preferably, in the step s32', the input device may perform match query in a word collocation database based on the context information to determine collocation relevancy information between the preliminary input candidate items and the corresponding context information; and process the one or more preliminary input candidate items based on the collocation relevancy information to obtain the one or more input candidate items. Specifically, in the step s32', the input device may also perform matching query in the word collocation database based on the context information, to determine the collocation relevancy information between the preliminary input candidate items and the corresponding context information based on the matching relationship between the one or more entries in the word collocation database and the context; for example, if it is a bull variable, then the collocation relevancy information indicates if a collocation exists; if it is a continuous variable, the collocation relevancy information indicates the collocation probability; here, the collocation relevancy information may be obtained through machine learning based on the combination frequency of a context and preliminary input candidate items in a word collocation database or other relevant databases. Based on the collocation relevancy information, by performing screening or ordering processing to the one or more preliminary input candidate items, the one or more input candidate items are obtained.

More preferably, the method further comprises a step s5' (not shown) and a step s6' (not shown); wherein, in the step s5', the input device performs analysis processing of one or more pieces of text information to obtain a word segmentation collocation relationship whose collocation frequency satisfies a certain threshold; in the step s6', the input device establishes or updates the word collocation database based on the word segmentation collocation relationship. Specifically, in the step s5', the input device obtains various logs or various articles, and performs an analysis method, for example, first performing word segmentation of the obtained text information, and then making statistics on the co-appearance frequency for neighboring words; when the co-appearance frequency exceeds a certain threshold, in the step s5', the input device judges that there is a certain collocation relationship between adjacent words, thereby obtaining a word segmentation collocation relationship whose collocation frequency satisfies a certain threshold; in the step s6', the input device establishes the word collocation database based on the word segmentation collocation relationship, or updates the existing word collocation database, etc. Here, the word collocation database includes, but is not limited to, collocation probability information between word segmentation collocation relationship and word segmentation collocation relationship; besides, the word collocation database likely comprises existing fixed words, e.g., idioms, proverbs, etc.; and meanwhile, through the update, the new words and expressions generated with rapid development of the existing network applications may be included therein, thereby effectively enhancing the user's input efficiency.

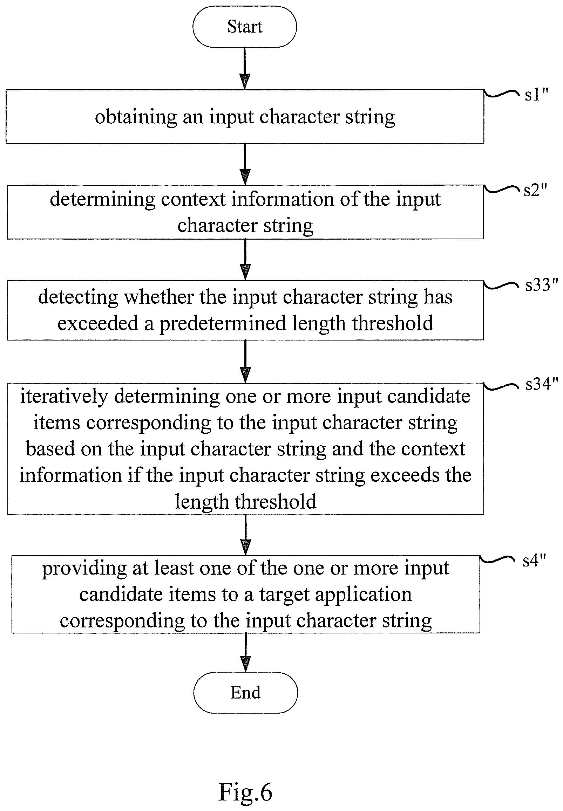

Fig. 6 shows a flow diagram of a method for providing input candidate items corresponding to an input character string according to the present invention. Specifically, in the step s1", the input device obtains an input character string; in the step s2", the input device determines context information of the input character string; in the step s33", the input device detects whether the input character string has exceeded a predetermined length threshold; if the input character string exceeds the length threshold, in the step s34", the input device iteratively determines one or more input candidate items corresponding to the input character string based on the input character string and the context information; in the step s4", the input device provides at least one of the one or more input candidate items to a target application corresponding to the input character string. Herein, the step s1",the step s2", the step s4" are identical or substantially identical to corresponding steps shown in Fig. 4, which are thus not detailed here.

The above steps work constantly therebetween. Here, those skilled in the art should understand that "constantly" means the above various steps perform obtaining an input character string, determining context information, detecting a length threshold, determining input candidate items, providing input candidate items and etc. respectively in real-time or according to a preset or real-time adjusted working pattern requirements, until the input device stops obtaining an input character string.

In the step s33", the input device detects whether the input character string has exceeded a predetermined length threshold. Specifically, in the step s33", the input device detects a length of the input character string based on a preset length threshold or a length threshold set by the user itself, to detect whether the length of the input character string has exceeded the predetermined length threshold. For example, when the predetermined character length threshold is N, and when the length of the input character string is N+1, then in the step s33", the input device detects that the input character string has exceeded the predetermined length threshold.

If the input character string exceeds the length threshold, in the step s34", the input device iteratively determines one or more input candidate items corresponding to the input character string based on the input character string and the context information. Specifically, if the input character string has exceeded the length threshold, in the step s34", the input device determines the input candidate item(s) corresponding to a first input character string within the length threshold based on the input character string and the context information through performing segmentation and other processing of the input character string based on the length threshold, and re-uses the determined input candidate item(s) as the context information, thereby determining one or more input candidate items corresponding to the input character string by the means of iteratively determining the input candidate item(s) corresponding to the next input character string within the length threshold.

Preferably, in the step s33", the input device may obtain one or more sample input candidate items corresponding to the input character string in an input lexicon; detect whether the number of words of at least one of the one or more sample input candidate items has exceeded a predetermined threshold of the number of words, to determine whether the input character string exceeds a predetermined length threshold. Specifically, in the step s33", the input device may also obtain one or more input candidate items corresponding to the entire input character string through, for example, directly matching the input character string in the input lexicon, and then, through random extraction or designated extraction (e.g., selecting the first input candidate item, etc.), obtain one or more sample input candidate items corresponding to the input character string in the input lexicon; and finally, determine whether the input character string has exceeded a predetermined length threshold through detecting the one or more sample input candidate items, e.g., at least one of the sample input candidate items exceeds a predetermined word number threshold.

Preferably, in the step s34", the input device may determine, based on the context information and a partial input character string adjacent to the context information in the input character string, one or more partial input candidate items corresponding to the partial input character string when the input character string exceeds the length threshold; determine, based on the partial input character string and a remaining input character string in the input character string, one or more remaining input candidate items corresponding to the remaining input character string, wherein the partial input candidate item(s) are used as context information of the remaining input character string; determine the one or more input candidate items based on the one or more partial input candidate items and the one or more remaining input candidate items.

Specifically, when the input character string exceeds the length threshold, the input character string is subject to word segmentation or paragraph segmentation and the like based on the context information, thereby obtaining a part of input character strings adjacent to the context information in the input character string, and determines one or more partial input candidate items corresponding to the partial input character string by combining the partial input character string with the context information; here, the determining method is identical or similar to the determining method in the step s3 in Fig. 4, which will not be detailed here. In the step s34", the input device uses the partial input candidate item(s) as the context information of the remaining input character string, by way of iteration, to determine one or more remaining input candidate items corresponding to the remaining input character string; after iteration, the partial input candidate item(s) and the remaining input candidate item(s) are joined and the like to determine one or more input candidate items based on for example the relationships between these character strings.

## Claims

1. A method for providing input candidate items corresponding to an input character string, the method comprising following steps:
a. obtaining (s1, s1', s1") an input character string;
b. performing natural language processing on a relevant text corresponding to the input character string to extract a focal word from the relevant text, and using the focal word as context information of the input character string, wherein the focal word is adjacent to an input position corresponding to the input character string, and the relevant text includes a text that has been displayed on a screen before or after the input position corresponding to the input character string;
c. determining (s3) one or more input candidate items corresponding to the input character string based on the input character string and the context information of the input character string;
d. providing (s4, s4', s4") at least one of the one or more input candidate items to a target application corresponding to the input character string, the target application including an application corresponding to an input box receiving the input character string, or another application associated with the input box receiving the input character string;
wherein the step c comprises:
c2. (s33") detecting whether the input character string has exceeded a predetermined length threshold;
and
c3. iteratively determining one or more input candidate items corresponding to the input character string based on the input character string and the context information if the input character string exceeds the length threshold;
wherein the step c3 comprises:
- -determining, based on the context information and a partial input character string adjacent to the context information in the input character string, one or more partial input candidate items corresponding to the partial input character string when the input character string exceeds the length threshold, wherein when the input character string exceeds the length threshold, the input character string is subject to word segmentation or paragraph segmentation based on the context information, thereby obtaining a part of input character strings adjacent to the context information in the input character string, and one or more partial input candidate items corresponding to the partial input character string are determined by combining the partial input character string with the context information;
- -determining, based on the partial input character string and a remaining input character string in the input character string, one or more remaining input candidate items corresponding to the remaining input character string, wherein the one or more partial input candidate items are used as context information of the remaining input character string; and
- -determining the one or more input candidate items based on the one or more partial input candidate items and the one or more remaining input candidate items, wherein the one or more partial input candidate items and the one or more remaining input candidate items are joined to determine the one or more input candidate items.

2. The method according to claim 1, wherein the step c comprises:
- performing (s31') match query in an input lexicon based on the input character string, so as to obtain one or more preliminary input candidate items corresponding to the input character string;
c1. processing (s32') the one or more preliminary input candidate items based on the context information of the input character string, so as to obtain the one or more input candidate items.

3. The method according to claim 2, wherein the step c1 comprises:
- performing match query in a word collocation database based on the context information of the input character string to determine collocation relevancy information between the preliminary input candidate items and the corresponding context information;
- processing the one or more preliminary input candidate items based on the collocation relevancy information to obtain the one or more input candidate items.

4. The method according to claim 1, wherein the step c comprises:
- determining a supplemented character string including the input character string based on the input character string and the context information of the input character string, wherein the supplemented character string further comprises a character string corresponding to the context information of the input character string;
- performing match query in an input lexicon based on the supplemented character string to obtain one or more supplemented input candidate items corresponding to the supplemented character string;
- selecting the one or more input candidate items from the one or more supplemented input candidate items based on the context information of the input character string.

5. The method according to claim 4, wherein the step c2 comprises:
- obtaining one or more sample input candidate items corresponding to the input character string in an input lexicon;
- detecting whether the number of words of at least one of the one or more sample input candidate items has exceeded a predetermined threshold of the number of words, to determine whether the input character string exceeds a predetermined length threshold.

6. An input device for providing input candidate items corresponding to an input character string, the device comprising:
an obtaining module (11, 11', 11") configured to obtain an input character string;
a context determining module (12, 12', 12") configured to perform natural language processing on a relevant text corresponding to the input character string to extract a focal word from the relevant text, and use the focal word as context information of the input character string, wherein the focal word is adjacent to an input position corresponding to the input character string, and the relevant text includes a text that has been displayed on a screen before or after the input position corresponding to the input character string;
a candidate items determining module (13, 13', 13") configured to determine one or more input candidate items corresponding to the input character string based on the input character string and the context information of the input character string;
a providing module (14, 14', 14") configured to provide at least one of the one or more input candidate items to a target application corresponding to the input character string, the target application including an application corresponding to an input box receiving the input character string, or another application associated with the input box receiving the input character string;
wherein the candidate items determining module comprises:
a detecting unit (133") configured to detect whether the input character string has exceeded a predetermined length threshold; and
an iteration unit (134") for iteratively determining one or more input candidate items corresponding to the input character string based on the input character string and the context information if the input character string exceeds the length threshold, the iteration unit being configured to:
- determine, based on the context information and a partial input character string adjacent to the context information in the input character string, one or more partial input candidate items corresponding to the partial input character string when the input character string exceeds the length threshold, wherein when the input character string exceeds the length threshold, the input character string is subject to word segmentation or paragraph segmentation based on the context information, thereby obtaining a part of input character strings adjacent to the context information in the input character string, and one or more partial input candidate items corresponding to the partial input character string are determined by combining the partial input character string with the context information;
- determine, based on the partial input character string and a remaining input character string in the input character string, one or more remaining input candidate items corresponding to the remaining input character string, wherein the one or more partial input candidate items are used as context information of the remaining input character string; and
- determine the one or more input candidate items based on the one or more partial input candidate items and the one or more remaining input candidate items, wherein the one or more partial input candidate items and the one or more remaining input candidate items are joined to determine the one or more input candidate items.

7. The input device according to claim 6, wherein the candidate items determining module (13') comprises:
a matching unit (131') configured to perform match query in an input lexicon based on the input character string, so as to obtain one or more preliminary input candidate items corresponding to the input character string;
a processing unit (132') configured to process the one or more preliminary input candidate items based on the context information of the input character string, so as to obtain the one or more input candidate items.

8. The input device according to claim 7, wherein the processing unit (132') is configured to:
- perform match query in a word collocation database based on the context information of the input character string to determine collocation relevancy information between the preliminary input candidate items and the corresponding context information;
- process the one or more preliminary input candidate items based on the collocation relevancy information to obtain the one or more input candidate items.

9. The input device according to claim 8, wherein the candidate items determining module (13) is configured to:
- determine a supplemented character string including the input character string based on the input character string and the context information of the input character string, wherein the supplemented character string further comprises a character string corresponding to the context information of the input character string;
- perform match query in an input lexicon based on the supplemented character string to obtain one or more supplemented input candidate items corresponding to the supplemented character string;
- selecting the one or more input candidate items from the one or more supplemented input candidate items based on the context information of the input character string.

10. The input device according to claim 9, wherein the detecting unit (133") is configured to:
- obtain one or more sample input candidate items corresponding to the input character string in an input lexicon;
- detect whether the number of words of at least one of the one or more sample input candidate items has exceeded a predetermined threshold of the number of words, to determine whether the input character string exceeds a predetermined length threshold.

## Patentansprüche

1. Verfahren zum Bereitstellen von Eingabekandidatenelementen, die einer Eingabezeichenfolge entsprechen, wobei das Verfahren die folgenden Schritte umfasst:
a. Erhalten einer Eingabezeichenkette (s1, s1', s1");
b. Durchführen einer natürlichen Sprachverarbeitung an einem relevanten Text, der der Eingabezeichenkette entspricht, um ein Fokuswort aus dem relevanten Text zu extrahieren, und Verwenden des Fokusworts als Kontextinformation der Eingabezeichenkette, wobei das Fokuswort an eine Eingabeposition angrenzt, die der Eingabezeichenkette entspricht, und der relevante Text einen Text enthält, der vor oder nach der Eingabeposition, die der Eingabezeichenkette entspricht, auf einem Bildschirm angezeigt wurde;
c. Bestimmen (s3) eines oder mehrerer Eingabekandidatenelemente, die der Eingabezeichenkette entsprechen, basierend auf der Eingabezeichenkette und den Kontextinformationen der Eingabezeichenkette;
d. Bereitstellen (s4, s4', s4") mindestens eines des einen oder der mehreren Eingabekandidatenelemente an eine Zielanwendung, die der Eingabezeichenkette entspricht, wobei die Zielanwendung eine Anwendung umfasst, die einem Eingabefeld entspricht, das die Eingabezeichenkette empfängt, oder eine andere Anwendung, die mit dem Eingabefeld verbunden ist, das die Eingabezeichenkette empfängt;
wobei der Schritt c umfasst:
c2. (s33") Erkennen, ob die eingegebene Zeichenkette einen vorbestimmten Längenschwellenwert überschritten hat; und
c3. iteratives Bestimmen eines oder mehrerer Eingabekandidatenelemente, die der Eingabezeichenkette entsprechen, basierend auf der Eingabezeichenkette und den Kontextinformationen, wenn die Eingabezeichenkette den Längenschwellenwert überschreitet;
wobei der Schritt c3 umfasst:
- Bestimmen, basierend auf den Kontextinformationen und einer Teileingabezeichenkette, die an die Kontextinformationen in der Eingabezeichenkette angrenzt, eines oder mehrerer Teileingabekandidatenelemente, die der Teileingabezeichenkette entsprechen, wenn die Eingabezeichenkette den Längenschwellenwert überschreitet, wobei, wenn die Eingabezeichenkette den Längenschwellenwert überschreitet, die Eingabezeichenkette einer Wortsegmentierung oder Absatzsegmentierung auf der Grundlage der Kontextinformationen unterzogen wird, wodurch ein Teil der Eingabezeichenketten, die an die Kontextinformationen in der Eingabezeichenkette angrenzen, erhalten wird, und ein oder mehrere Teileingabekandidatenelemente, die der Teileingabezeichenkette entsprechen, durch Kombinieren der Teileingabezeichenkette mit den Kontextinformationen bestimmt werden;
- Bestimmen, basierend auf der Teileingabezeichenkette und einer verbleibenden Eingabezeichenkette in der Eingabezeichenkette, eines oder mehrerer verbleibender Eingabekandidatenelemente, die der verbleibenden Eingabezeichenkette entsprechen, wobei das eine oder die mehreren Teileingabekandidatenelemente als Kontextinformation der verbleibenden Eingabezeichenkette verwendet werden; und
- Bestimmen des einen oder der mehreren Eingabekandidatenelemente auf der Grundlage des einen oder der mehreren Teileingabekandidatenelemente und des einen oder der mehreren verbleibenden Eingabekandidatenelemente, wobei das eine oder die mehreren Teileingabekandidatenelemente und das eine oder die mehreren verbleibenden Eingabekandidatenelemente verbunden werden, um das eine oder die mehreren Eingabekandidatenelemente zu bestimmen.

2. Verfahren nach Anspruch 1, wobei der Schritt c umfasst:
- Durchführen (s31') einer Abgleichsabfrage in einem Eingabelexikon auf der Grundlage der Eingabezeichenfolge, um ein oder mehrere vorläufige Eingabekandidatenelemente zu erhalten, die der Eingabezeichenfolge entsprechen;
c1. Verarbeiten (s32') des einen oder der mehreren vorläufigen Eingabekandidatenelemente auf der Grundlage der Kontextinformationen der Eingabezeichenfolge, um den einen oder die mehreren Eingabekandidatenelemente zu erhalten.

3. Verfahren nach Anspruch 2, wobei der Schritt c1 umfasst:
- Durchführen einer Abgleichsabfrage in einer Wortkollokationsdatenbank auf der Grundlage der Kontextinformationen der Eingabezeichenfolge, um Kollokationsrelevanzinformationen zwischen den vorläufigen Eingabekandidatenelementen und den entsprechenden Kontextinformationen zu bestimmen;
- Verarbeiten des einen oder der mehreren vorläufigen Eingabekandidatenelemente auf der Grundlage der Kollokationsrelevanzinformationen, um das eine oder die mehreren Eingabekandidatenelemente zu erhalten.

4. Verfahren nach Anspruch 1, wobei der Schritt c umfasst:
- Bestimmen einer ergänzten Zeichenkette einschließlich der Eingabezeichenkette auf der Grundlage der Eingabezeichenkette und der Kontextinformationen der Eingabezeichenkette, wobei die ergänzte Zeichenkette ferner eine Zeichenkette umfasst, die den Kontextinformationen der Eingabezeichenkette entspricht;
- Durchführen einer Übereinstimmungsabfrage in einem Eingabelexikon auf der Grundlage der ergänzten Zeichenkette, um ein oder mehrere ergänzte Eingabekandidatenelemente zu erhalten, die der ergänzten Zeichenkette entsprechen;
- Auswahl des einen oder der mehreren Eingabekandidatenelemente aus dem einen oder den mehreren ergänzten Eingabekandidatenelemente auf der Grundlage der Kontextinformationen der Eingabezeichenfolge.

5. Verfahren nach Anspruch 4, wobei der Schritt c2 umfasst:
- Erhalten eines oder mehrerer Beispiel-Eingabekandidatenelemente, die der Eingabezeichenkette in einem Eingabe-Lexikon entsprechen;
- Erfassen, ob die Anzahl der Wörter von mindestens einem des einen oder der mehreren Beispiel-Eingabekandidatenelemente einen vorbestimmten Schwellenwert für die Anzahl der Wörter überschritten hat, um zu bestimmen, ob die Eingabezeichenfolge einen vorbestimmten Längenschwellenwert überschreitet.

6. Eingabevorrichtung zum Bereitstellen von Eingabekandidatenelementen, die einer Eingabezeichenfolge entsprechen, wobei die Vorrichtung umfasst:
ein Erfassungsmodul (11, 11', 11"), das dazu konfiguriert ist, eine Eingabezeichenfolge zu erhalten;
ein kontextbestimmendes Modul (12, 12', 12"), das dazu konfiguriert ist, eine natürliche Sprachverarbeitung an einem relevanten Text durchzuführen, der der eingegebenen Zeichenkette entspricht, um ein Fokuswort aus dem relevanten Text zu extrahieren, und das Fokuswort als Kontextinformation der eingegebenen Zeichenkette zu verwenden, wobei das Fokuswort an eine Eingabeposition angrenzt, die der eingegebenen Zeichenkette entspricht, und der relevante Text einen Text enthält, der vor oder nach der Eingabeposition, die der eingegebenen Zeichenkette entspricht, auf einem Bildschirm angezeigt wurde;
ein Modul (13, 13', 13") zum Bestimmen von Kandidatenelementen, das dazu konfiguriert ist, ein oder mehrere Eingabekandidatenelemente, die der Eingabezeichenfolge entsprechen, auf der Grundlage der Eingabezeichenfolge und der Kontextinformationen der Eingabezeichenfolge zu bestimmen;
ein Bereitstellungsmodul (14, 14', 14"), das dazu konfiguriert ist, mindestens eines des einen oder der mehreren Eingabekandidatenelemente einer Zielanwendung bereitzustellen, die der Eingabezeichenkette entspricht, wobei die Zielanwendung eine Anwendung umfasst, die einem Eingabefeld entspricht, das die Eingabezeichenkette empfängt, oder eine andere Anwendung, die mit dem Eingabefeld verbunden ist, das die Eingabezeichenkette empfängt;
wobei das Modul zur Bestimmung von Kandidatenelementen umfasst:
eine Erkennungseinheit (133"), die dazu konfiguriert ist, zu erkennen, ob die eingegebene Zeichenkette einen vorbestimmten Längenschwellenwert überschritten hat; und
eine Iterationseinheit (134") zum iterativen Bestimmen eines oder mehrerer Eingabekandidatenelemente, die der Eingabezeichenkette entsprechen, basierend auf der Eingabezeichenkette und den Kontextinformationen, wenn die Eingabezeichenkette den Längenschwellenwert überschreitet, wobei die Iterationseinheit dazu konfiguriert ist:
- basierend auf den Kontextinformationen und einer Teileingabezeichenkette, die an die Kontextinformationen in der Eingabezeichenkette angrenzt, ein oder mehrere Teileingabekandidatenelemente zu bestimmen, die der Teileingabezeichenkette entsprechen, wenn die Eingabezeichenkette den Längenschwellenwert überschreitet, wobei, wenn die Eingabezeichenkette den Längenschwellenwert überschreitet, die Eingabezeichenkette einer Wortsegmentierung oder Absatzsegmentierung basierend auf den Kontextinformationen unterzogen wird, wodurch ein Teil der Eingabezeichenketten, die an die Kontextinformationen in der Eingabezeichenkette angrenzen, erhalten wird, und ein oder mehrere Teileingabekandidatenelemente, die der Teileingabezeichenkette entsprechen, durch Kombinieren der Teileingabezeichenkette mit den Kontextinformationen bestimmt werden;
- basierend auf der Teileingabezeichenkette und einer verbleibenden Eingabezeichenkette in der Eingabezeichenkette, ein oder mehrere verbleibende Eingabekandidatenelemente zu bestimmen, die der verbleibenden Eingabezeichenkette entsprechen, wobei das eine oder die mehreren Teileingabekandidatenelemente als Kontextinformation der verbleibenden Eingabezeichenkette verwendet werden; und
- das eine oder die mehreren Eingabekandidatenelemente auf der Grundlage des einen oder der mehreren Teileingabekandidatenelemente und des einen oder der mehreren verbleibenden Eingabekandidatenelemente zu bestimmen, wobei das eine oder die mehreren Teileingabekandidatenelemente und das eine oder die mehreren verbleibenden Eingabekandidatenelemente verbunden werden, um das einen oder die mehreren Eingabekandidatenelemente zu bestimmen.

7. Eingabevorrichtung nach Anspruch 6, wobei das Modul (13') zur Bestimmung von Kandidatenelementen umfasst:
eine Abgleichseinheit (131'), die dazu konfiguriert ist, eine Abgleichsabfrage in einem Eingabelexikon auf der Grundlage der Eingabezeichenkette durchzuführen, um ein oder mehrere vorläufige Eingabekandidatenelemente zu erhalten, die der Eingabezeichenkette entsprechen;
eine Verarbeitungseinheit (132'), die dazu konfiguriert ist, das eine oder die mehreren vorläufigen Eingabekandidatenelemente auf der Grundlage der Kontextinformationen der Eingabezeichenfolge zu verarbeiten, um das eine oder die mehreren Eingabekandidatenelemente zu erhalten.

8. Eingabevorrichtung nach Anspruch 7, wobei die Verarbeitungseinheit (132') dazu konfiguriert ist:
- eine Abgleichsabfrage in einer Wortkollokationsdatenbank auf der Grundlage der Kontextinformationen der eingegebenen Zeichenkette durchzuführen, um Kollokationsrelevanzinformationen zwischen den vorläufigen Eingabekandidatenelementen und den entsprechenden Kontextinformationen zu bestimmen;
- den einen oder die mehreren vorläufigen Eingabekandidatenelemente auf der Grundlage der Kollokationsrelevanzinformationen zu verarbeiten, um das eine oder die mehreren Eingabekandidatenelemente zu erhalten.

9. Eingabevorrichtung nach Anspruch 8, wobei das Modul (13) zur Bestimmung von Kandidatenelementen dazu konfiguriert ist:
- eine ergänzte Zeichenkette einschließlich der Eingabezeichenkette auf der Grundlage der Eingabezeichenkette und der Kontextinformationen der Eingabezeichenkette zu bestimmen, wobei die ergänzte Zeichenkette ferner eine Zeichenkette umfasst, die den Kontextinformationen der Eingabezeichenkette entspricht;
- eine Abgleichsabfrage in einem Eingabelexikon auf der Grundlage der ergänzten Zeichenkette durchzuführen, um ein oder mehrere ergänzte Eingabekandidatenelemente zu erhalten, die der ergänzten Zeichenkette entsprechen;
- das eine oder die mehreren Eingabekandidatenelemente aus dem einen oder den mehreren ergänzten Eingabekandidaten auf der Grundlage der Kontextinformationen der Eingabezeichenfolge auszuwählen.

10. Eingabevorrichtung nach Anspruch 9, wobei die Erfassungseinheit (133") dazu konfiguriert ist:
- ein oder mehrere Beispiel-Eingabekandidatenelemente zu erhalten, die der Eingabezeichenfolge in einem Eingabelexikon entsprechen,
- zu erkennen, ob die Anzahl der Wörter mindestens eines des einen oder mehreren Beispiel-Eingabekandidatenelemente einen vorbestimmten Schwellenwert für die Anzahl der Wörter überschritten hat, um zu bestimmen, ob die Eingabezeichenfolge einen vorbestimmten Längenschwellenwert überschreitet.

## Revendications

1. Procédé pour fournir des éléments candidats d'entrée correspondant à une chaîne de caractères d'entrée, le procédé comprenant les étapes suivantes :
a. obtenir (s1, s1', s1") une chaîne de caractères d'entrée ;
b. réaliser un traitement de langage naturel sur un texte pertinent correspondant à la chaîne de caractères d'entrée pour extraire un mot focal du texte pertinent, et utiliser le mot focal comme informations contextuelles de la chaîne de caractères d'entrée, dans lequel le mot focal est adjacent à une position d'entrée correspondant à la chaîne de caractères d'entrée, et le texte pertinent comporte un texte qui a été affiché sur un écran avant ou après la position d'entrée correspondant à la chaîne de caractères d'entrée ;
c. déterminer (s3) un ou plusieurs éléments candidats d'entrée correspondant à la chaîne de caractères d'entrée sur la base de la chaîne de caractères d'entrée et des informations contextuelles de la chaîne de caractères d'entrée ;
d. fournir (s4, s4', s4") au moins un des un ou plusieurs éléments candidats d'entrée à une application cible correspondant à la chaîne de caractères d'entrée, l'application cible comportant une application correspondant à une boîte d'entrée recevant la chaîne de caractères d'entrée, ou une autre application associée à la boîte d'entrée recevant la chaîne de caractères d'entrée ;
dans lequel l'étape c comprend :
c2. une détection (s33") indiquant si la chaîne de caractères d'entrée a dépassé un seuil de longueur prédéterminé ; et
c3. la détermination de manière itérative d'un ou plusieurs éléments candidats d'entrée correspondant à la chaîne de caractères d'entrée sur la base de la chaîne de caractères d'entrée et des informations contextuelles si la chaîne de caractères d'entrée dépasse le seuil de longueur ;
dans lequel l'étape c3 comprend :
- la détermination, sur la base des informations contextuelles et d'une chaîne de caractères d'entrée partielle adjacente aux informations contextuelles dans la chaîne de caractères d'entrée, d'un ou plusieurs éléments candidats d'entrée partiels correspondant à la chaîne de caractères d'entrée partielle lorsque la chaîne de caractères d'entrée dépasse le seuil de longueur, dans lequel lorsque la chaîne de caractères d'entrée dépasse le seuil de longueur, la chaîne de caractères d'entrée est soumise à une segmentation de mots ou à une segmentation de paragraphes sur la base des informations contextuelles, obtenant ainsi une partie de chaînes de caractères d'entrée adjacentes aux informations contextuelles dans la chaîne de caractères d'entrée, et un ou plusieurs éléments candidats d'entrée partiels correspondant à la chaîne de caractères d'entrée partielle sont déterminés en combinant la chaîne de caractères d'entrée partielle avec les informations contextuelles ;
- la détermination, sur la base de la chaîne de caractères d'entrée partielle et d'une chaîne de caractères d'entrée restante dans la chaîne de caractères d'entrée, d'un ou plusieurs éléments candidats d'entrée restants correspondant à la chaîne de caractères d'entrée restante, dans lequel les un ou plusieurs éléments candidats d'entrée partiels sont utilisés comme informations contextuelles de la chaîne de caractères d'entrée restante ; et
- la détermination des un ou plusieurs éléments candidats d'entrée sur la base des un ou plusieurs éléments candidats d'entrée partiels et des un ou plusieurs éléments candidats d'entrée restants, dans lequel les un ou plusieurs éléments candidats d'entrée partiels et les un ou plusieurs éléments candidats d'entrée restants sont joints pour déterminer les un ou plusieurs éléments candidats d'entrée.

2. Procédé selon la revendication 1, dans lequel l'étape c comprend :
- la réalisation (s31') d'une requête de concordance dans un lexique d'entrée sur la base de la chaîne de caractères d'entrée, de manière à obtenir un ou plusieurs éléments candidats d'entrée préliminaires correspondant à la chaîne de caractères d'entrée ;
c1. le traitement (s32') des un ou plusieurs éléments candidats d'entrée préliminaires sur la base des informations contextuelles de la chaîne de caractères d'entrée, de manière à obtenir les un ou plusieurs éléments candidats d'entrée.

3. Procédé selon la revendication 2, dans lequel l'étape c1 comprend :
- la réalisation d'une requête de concordance dans une base de données de collocation sur la base des informations contextuelles de la chaîne de caractères d'entrée pour déterminer des informations de pertinence de collocation entre les éléments candidats d'entrée préliminaires et les informations contextuelles correspondantes ;
- le traitement des un ou plusieurs éléments candidats d'entrée préliminaires sur la base des informations de pertinence de collocation pour obtenir les un ou plusieurs éléments candidats d'entrée.

4. Procédé selon la revendication 1, dans lequel l'étape c comprend :
- la réalisation d'une détermination d'une chaîne de caractères complétée comportant la chaîne de caractères d'entrée sur la base de la chaîne de caractères d'entrée et des informations contextuelles de la chaîne de caractères d'entrée, dans lequel la chaîne de caractères complétée comprend en outre une chaîne de caractères correspondant aux informations contextuelles de la chaîne de caractères d'entrée ;
- la réalisation d'une requête de concordance dans un lexique d'entrée sur la base de la chaîne de caractères complétée pour obtenir un ou plusieurs éléments candidats d'entrée complétés correspondant à la chaîne de caractères complétée ;
- la sélection des un ou plusieurs éléments candidats d'entrée à partir des un ou plusieurs éléments candidats d'entrée complétés sur la base des informations contextuelles de la chaîne de caractères d'entrée.

5. Procédé selon la revendication 4, dans lequel l'étape c2 comprend :
- l'obtention d'un ou plusieurs échantillons d'éléments candidats d'entrée correspondant à la chaîne de caractères d'entrée dans un lexique d'entrée ;
- une détection indiquant si le nombre de mots d'au moins un des un ou plusieurs échantillons d'éléments candidats d'entrée a dépassé un seuil prédéterminé du nombre de mots, pour déterminer si la chaîne de caractères d'entrée dépasse un seuil de longueur prédéterminé.

6. Dispositif d'entrée pour fournir des éléments candidats d'entrée correspondant à une chaîne de caractères d'entrée, le dispositif comprenant :
un module d'obtention (11, 11', 11") configuré pour obtenir une chaîne de caractères d'entrée ;
un module de détermination de contexte (12, 12', 12") configuré pour réaliser un traitement de langage naturel sur un texte pertinent correspondant à la chaîne de caractères d'entrée pour extraire un mot focal du texte pertinent, et utiliser le mot focal comme informations contextuelles de la chaîne de caractères d'entrée, dans lequel le mot focal est adjacent à une position d'entrée correspondant à la chaîne de caractères d'entrée, et le texte pertinent comporte un texte qui a été affiché sur un écran avant ou après la position d'entrée correspondant à la chaîne de caractères d'entrée ;
un module de détermination d'éléments candidats (13, 13', 13") configuré pour déterminer un ou plusieurs éléments candidats d'entrée correspondant à la chaîne de caractères d'entrée sur la base de la chaîne de caractères d'entrée et des informations contextuelles de la chaîne de caractères d'entrée ;
un module de fourniture (14, 14', 14") configuré pour fournir au moins un des un ou plusieurs éléments candidats d'entrée à une application cible correspondant à la chaîne de caractères d'entrée, l'application cible comportant une application correspondant à une boîte d'entrée recevant la chaîne de caractères d'entrée, ou une autre application associée à la boîte d'entrée recevant la chaîne de caractères d'entrée ;
dans lequel le module de détermination d'éléments candidats comprend :
une unité de détection (133") configurée pour détecter si la chaîne de caractères d'entrée a dépassé un seuil de longueur prédéterminé ; et
une unité d'itération (134") pour déterminer de manière itérative un ou plusieurs éléments candidats d'entrée correspondant à la chaîne de caractères d'entrée sur la base de la chaîne de caractères d'entrée et des informations contextuelles si la chaîne de caractères d'entrée dépasse le seuil de longueur, l'unité d'itération étant configurée pour :
- déterminer, sur la base des informations contextuelles et d'une chaîne de caractères d'entrée partielle adjacente aux informations contextuelles dans la chaîne de caractères d'entrée, un ou plusieurs éléments candidats d'entrée partiels correspondant à la chaîne de caractères d'entrée partielle lorsque la chaîne de caractères d'entrée dépasse le seuil de longueur, dans lequel lorsque la chaîne de caractères d'entrée dépasse le seuil de longueur, la chaîne de caractères d'entrée est soumise à une segmentation de mots ou à une segmentation de paragraphes sur la base des informations contextuelles, obtenant ainsi une partie de chaînes de caractères d'entrée adjacentes aux informations contextuelles dans la chaîne de caractères d'entrée, et un ou plusieurs éléments candidats d'entrée partiels correspondant à la chaîne de caractères d'entrée partielle sont déterminés en combinant la chaîne de caractères d'entrée partielle avec les informations contextuelles ;
- déterminer, sur la base de la chaîne de caractères d'entrée partielle et d'une chaîne de caractères d'entrée restante dans la chaîne de caractères d'entrée, un ou plusieurs éléments candidats d'entrée restants correspondant à la chaîne de caractères d'entrée restante, dans lequel les un ou plusieurs éléments candidats d'entrée partiels sont utilisés comme informations contextuelles de la chaîne de caractères d'entrée restante ; et
- déterminer les un ou plusieurs éléments candidats d'entrée sur la base des un ou plusieurs éléments candidats d'entrée partiels et des un ou plusieurs éléments candidats d'entrée restants, dans lequel les un ou plusieurs éléments candidats d'entrée partiels et les un ou plusieurs éléments candidats d'entrée restants sont joints pour déterminer les un ou plusieurs éléments candidats d'entrée.

7. Dispositif d'entrée selon la revendication 6, dans lequel le module de détermination d'éléments candidats (13') comprend :
une unité de mise en concordance (131') configurée pour réaliser une requête de concordance dans un lexique d'entrée sur la base de la chaîne de caractères d'entrée, de manière à obtenir un ou plusieurs éléments candidats d'entrée préliminaires correspondant à la chaîne de caractères d'entrée ;
une unité de traitement (132') configurée pour traiter les un ou plusieurs éléments candidats d'entrée préliminaires sur la base des informations contextuelles de la chaîne de caractères d'entrée, de manière à obtenir les un ou plusieurs éléments candidats d'entrée.

8. Dispositif d'entrée selon la revendication 7, dans lequel l'unité de traitement (132') est configurée pour :
- réaliser une requête de concordance dans une base de données de collocation sur la base des informations contextuelles de la chaîne de caractères d'entrée pour déterminer des informations de pertinence de collocation entre les éléments candidats d'entrée préliminaires et les informations contextuelles correspondantes ;
- traiter les un ou plusieurs éléments candidats d'entrée préliminaires sur la base des informations de pertinence de collocation pour obtenir les un ou plusieurs éléments candidats d'entrée.

9. Dispositif d'entrée selon la revendication 8, dans lequel le module de détermination d'éléments candidats (13) est configuré pour :
- déterminer une chaîne de caractères complétée comportant la chaîne de caractères d'entrée sur la base de la chaîne de caractères d'entrée et des informations contextuelles de la chaîne de caractères d'entrée, dans lequel la chaîne de caractères complétée comprend en outre une chaîne de caractères correspondant aux informations contextuelles de la chaîne de caractères d'entrée ;
- réaliser une requête de concordance dans un lexique d'entrée sur la base de la chaîne de caractères complétée pour obtenir un ou plusieurs éléments candidats d'entrée complétés correspondant à la chaîne de caractères complétée ;
- sélectionner les un ou plusieurs éléments candidats d'entrée à partir des un ou plusieurs éléments candidats d'entrée complétés sur la base des informations contextuelles de la chaîne de caractères d'entrée.

10. Dispositif d'entrée selon la revendication 9, dans lequel l'unité de détection (133") est configurée pour :
- obtenir un ou plusieurs échantillons d'éléments candidats d'entrée correspondant à la chaîne de caractères d'entrée dans un lexique d'entrée ;
- détecter si le nombre de mots d'au moins un des un ou plusieurs échantillons d'éléments candidats d'entrée a dépassé un seuil prédéterminé du nombre de mots, pour déterminer si la chaîne de caractères d'entrée dépasse un seuil de longueur prédéterminé.
